# EUROPEAN PATENT APPLICATION

(11) **EP 3 001 753 A1**
(43) Date of publication of application: **30.03.2016**
(21) Application number: 13887807.9
(22) Date of filing: 25.06.2013
(51) Int. Cl.: H04W 72/12

(54) **DATA SCHEDULING METHOD, APPARATUS, BASE STATION AND SYSTEM**

(71) Applicant: Huawei Technologies Co., Ltd., Longgang District Shenzhen, Guangdong 518129 (CN)
(72) Inventor: LI, Qiong, Shenzhen Guangdong 518129 (CN); JIN, Xinbo, Shenzhen Guangdong 518129 (CN)
(74) Representative: Pfenning, Meinig & Partner mbB
(86) International application number: PCT/CN2013/077879
(87) International publication number: WO 2014/205650

(57) **Abstract**

The present invention discloses a data scheduling method, an apparatus, a base station and a system, which relate to the communications field and reduce waste of resources for data transmission. A specific solution is that: Coordinated multipoint data scheduling information is sent to a baseband processing apparatus in each cell by using a base station or a central scheduling apparatus between base stations; and a baseband processing apparatus of a coordinated cell sends, to a baseband processing apparatus of a serving cell, coordinated multipoint data provided by a user equipment. The present invention is applied to coordinated multipoint.

## Description

### TECHNICAL FIELD

The present invention relates to the communications field, and in particular, to a data scheduling method, an apparatus, a base station, and a system.

### BACKGROUND

As one of important technologies of Long Term Evolution (Long Term Evolution, LTE), Coordinated multipoint (Coordinated Multiple Points, CoMP) transmission refers to that multiple transmission points in separated geographical locations collaboratively participate in data transmission of a terminal or jointly receive data sent by a terminal. The multiple transmission points participating in the coordination generally refer to base stations of different cells.

In the CoMP technology, a user is served simultaneously by multiple cells under at least one base station. For an uplink CoMP user, cells that provide a service for the user include a serving cell and a coordinated cell, where the coordinated cell may assist the serving cell in performing joint demodulation, to improve demodulation performance.

Implementation of Uplink CoMP of LTE does not rely on a 3rd Generation Partnership Project (The 3rd Generation Partnership Project, 3GPP) protocol. At present, there are mainly two technical solutions. Solution 1: For a user equipment (User Equipment, UE) in the CoMP solution, joint receiving is used for antenna data of the serving cell and the coordinated cell. The coordinated cell needs to transmit data to the serving cell. The coordinated cell broadcasts time-domain data to the serving cell. A baseband processing apparatus in which the serving cell is located performs time-frequency domain transformation for all antennas of the serving cell and the coordinated cell. The serving cell extracts, according to a CoMP attribute of a user, frequency-domain data of a corresponding coordinated cell, to perform joint demodulation.

Solution 2: If uplink CoMP needs to be performed for a user of a serving cell, the coordinated cell is instructed by using signaling to send CoMP user data to the serving cell, to perform CoMP combination. The coordinated cell sends, to the serving cell, the CoMP user data separated by performing time-domain processing, so that the serving cell performs joint demodulation.

During a process of implementing the foregoing uplink CoMP, the inventor finds that at least following problems exist in the prior art: During the process of implementing the uplink CoMP, the serving cell of the user needs to perform time-domain processing for all antennas of the coordinated cell or needs to interact with multiple cells, where inter-cell signaling interworking is complex, which wastes resources of the serving cell including hardware resources and software resources.

### SUMMARY

Embodiments of the present invention provide a data scheduling method, an apparatus, a base station, and a system, which reduce waste of resources for data transmission.

To achieve the foregoing objective, the embodiments of the present invention use the following technical solutions:
According to a first aspect, a data scheduling method applied to a coordinated cell is provided, where the method includes:
   receiving, by a baseband processing apparatus of the coordinated cell, data scheduling information of the coordinated cell that is sent by a central scheduling apparatus;
   acquiring, by the baseband processing apparatus of the coordinated cell according to the data scheduling information of the coordinated cell, first data sent by a user equipment; and
   sending, by the baseband processing apparatus of the coordinated cell, the first data to a baseband processing apparatus of the serving cell.

With reference to the first aspect, in a first possible implementation manner,
the acquiring, by the baseband processing apparatus of the coordinated cell according to the data scheduling information of the coordinated cell, first data sent by a user equipment includes:
acquiring, by the baseband processing apparatus of the coordinated cell, air interface data of the user equipment according to the data scheduling information of the coordinated cell; and
receiving, by the baseband processing apparatus of the coordinated cell, on a channel indicated by the air interface data of the user equipment, the first data sent by the user equipment.

With reference to the first aspect or the first possible implementation manner, in a second possible implementation manner, the sending, by the baseband processing apparatus of the coordinated cell, the first data to a baseband processing apparatus of the serving cell includes:
performing, by the baseband processing apparatus of the coordinated cell according to the data scheduling information of the coordinated cell, time-frequency domain transformation or multiple-input multiple-output MIMO balancing or inverse discrete Fourier transform IDFT or quadrature amplitude modulation QAM demodulation on the first data; and
sending, by the baseband processing apparatus of the coordinated cell to the baseband processing apparatus of the serving cell, first data obtained after the time-frequency domain transformation or the multiple-input multiple-output MIMO balancing or the inverse discrete Fourier transform IDFT or the quadrature amplitude modulation QAM demodulation.

According to a second aspect, a data scheduling method is provided, where the method includes:
generating, by a central scheduling apparatus, data scheduling information for receiving data of a user equipment, where the data scheduling information includes: data scheduling information of a serving cell and data scheduling information of at least one coordinated cell;
sending, by the central scheduling apparatus, the data scheduling information of the serving cell to a baseband processing apparatus of the serving cell, so that the baseband processing apparatus of the serving cell receives, according to the data scheduling information of the serving cell, second data sent by the user equipment; and
separately sending, by the central scheduling apparatus, the data scheduling information of the at least one coordinated cell to a baseband processing apparatus of the corresponding coordinated cell, so that the baseband processing apparatus of the coordinated cell receives, according to data scheduling information of the corresponding coordinated cell, first data sent by the user equipment.

According to a third aspect, a data scheduling method applied to a serving cell is provided, where the method includes:
receiving, by a baseband processing apparatus of the serving cell, data scheduling information of the serving cell that is sent by a central scheduling apparatus;
acquiring, by the baseband processing apparatus of the serving cell according to the data scheduling information of the serving cell, second data sent by a user equipment;
receiving, by the baseband processing apparatus of the serving cell, first data sent by a baseband processing apparatus of a coordinated cell; and
performing, by the baseband processing apparatus of the serving cell, coordinated multipoint CoMP combination of the first data and the second data.

With reference to the third aspect, in a first possible implementation manner, where the acquiring, by the baseband processing apparatus of the serving cell according to the data scheduling information of the serving cell, second data sent by a user equipment includes:
acquiring, by the baseband processing apparatus of the serving cell, air interface data of the user equipment according to the data scheduling information of the serving cell; and
receiving, by the baseband processing apparatus of the serving cell, on a channel indicated by the air interface data of the user equipment, the second data sent by the user equipment.

With reference to the third aspect or the first possible implementation manner, in a second possible implementation manner, the performing, by the baseband processing apparatus of the serving cell, coordinated multipoint CoMP combination of the first data and the second data includes:
performing, by the baseband processing apparatus of the serving cell according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

With reference to the third aspect or the first possible implementation manner, in a third possible implementation manner,
the first data is first data obtained after the baseband processing apparatus of the coordinated cell performs time-frequency domain transformation or multiple-input multiple-output MIMO balancing or IDFT or QAM demodulation.

According to a fourth aspect, a baseband processing apparatus is provided, where the apparatus is applied to a coordinated cell and includes: a scheduling unit, a receiving unit, and a sending unit;
the scheduling unit is configured to receive data scheduling information of the coordinated cell that is sent by a central scheduling apparatus, and send the data scheduling information of the coordinated cell to the receiving unit;
the receiving unit is configured to receive the data scheduling information of the coordinated cell that is sent by the scheduling unit, acquire, according to the data scheduling information of the coordinated cell, first data sent by a user equipment, and send the first data to the sending unit; and
the sending unit is configured to receive the first data sent by the receiving unit, and send the first data to a baseband processing apparatus of the serving cell.

With reference to the fourth aspect, in a first possible implementation manner, the receiving subunit includes a demodulating subunit and a receiving subunit; where:
the demodulating subunit is configured to acquire air interface data of the user equipment according to the data scheduling information of the coordinated cell, and send the air interface data of the user equipment to the receiving subunit; and
the receiving subunit is configured to receive the air interface data of the user equipment that is sent by the demodulating subunit, and receive, on a channel indicated by the air interface data of the user equipment, the first data sent by the user equipment.

With reference to the fourth aspect or the first possible implementation manner, in a second possible implementation manner, the sending unit includes a preprocessing subunit and a sending subunit;
the preprocessing subunit is configured to acquire the data scheduling information of the coordinated cell that is sent by the scheduling unit and the first data sent by the receiving unit, and perform, according to the data scheduling information of the coordinated cell, time-frequency domain transformation or multiple-input multiple-output MIMO balancing or inverse discrete Fourier transform IDFT or quadrature amplitude modulation QAM demodulation on the first data; and
the sending subunit is configured to send, to the baseband processing apparatus of the serving cell, first data obtained after the preprocessing subunit performs the time-frequency domain transformation or the multiple-input multiple-output MIMO balancing or the inverse discrete Fourier transform IDFT or the quadrature amplitude modulation QAM demodulation.

According to a fifth aspect, a central scheduling apparatus is provided, where the apparatus includes: a scheduling unit and a sending unit;
the scheduling unit is configured to generate data scheduling information for receiving data of a user equipment, and send the data scheduling information to the sending unit, where the data scheduling information includes: data scheduling information of a serving cell and data scheduling information of at least one coordinated cell;
the sending unit is configured to receive the data scheduling information sent by the scheduling unit, and send the data scheduling information of the serving cell to a baseband processing apparatus of the serving cell, so that the baseband processing apparatus of the serving cell receives, according to the data scheduling information of the serving cell, second data sent by the user equipment; and
the sending unit is further configured to send the data scheduling information of the at least one coordinated cell to a baseband processing apparatus of the corresponding coordinated cell, so that the baseband processing apparatus of the coordinated cell receives, according to the data scheduling information of the corresponding coordinated cell, first data sent by the user equipment.

According to a sixth aspect, a baseband processing apparatus is provided, where the apparatus is applied to a serving cell and includes: a scheduling unit, a receiving unit, and a combining unit;
the scheduling unit is configured to receive data scheduling information of the serving cell that is sent by a central scheduling apparatus, and send the data scheduling information of the serving cell to the receiving unit;
the receiving unit is configured to receive the data scheduling information of the serving cell that is sent by the scheduling unit, acquire, according to the data scheduling information of the serving cell, second data sent by a user equipment, and send the second data to the combining unit;
the receiving unit is further configured to receive first data sent by a baseband processing apparatus of a coordinated cell, and send the first data to the combining unit; and
the combining unit is configured to receive the first data and the second data that are sent by the receiving unit, and perform coordinated multipoint CoMP combination of the first data and the second data.

With reference to the sixth aspect, in a first possible implementation manner, the receiving unit includes a demodulating subunit and a receiving subunit; where:
the demodulating subunit is configured to acquire air interface data of the user equipment according to the data scheduling information of the serving cell, and send the air interface data of the user equipment to the receiving subunit; and
the receiving subunit is configured to receive the air interface data of the user equipment that is sent by the demodulating subunit, and receive, on a channel indicated by the air interface data, the second data sent by the user equipment.

With reference to the sixth aspect or the first possible implementation manner, in a second possible implementation manner, the combining unit is specifically configured to acquire the data scheduling information of the serving cell, receive the first data and the second data that are sent by the receiving unit, and perform, according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

With reference to the sixth aspect or the first possible implementation manner, in a third possible implementation manner,
the first data is first data obtained after the baseband processing apparatus of the coordinated cell performs time-frequency domain transformation or multiple-input multiple-output MIMO balancing or IDFT or QAM demodulation.

According to a seventh aspect, a baseband processing apparatus is provided, where the apparatus is applied to a coordinated cell and includes: at least one processor, a memory, a receiver, a transmitter, and a data bus, where the data bus is configured to implement a connection and communication between the processor, the memory, the receiver, and the transmitter, and the memory is configured to store program code and data that are executed by the processor;
the processor is configured to receive, by using the receiver, data scheduling information of the coordinated cell that is sent by a central scheduling apparatus;
the processor is configured to acquire, according to the data scheduling information of the coordinated cell and by using the receiver, first data sent by a user equipment; and
the processor is configured to send the first data to a baseband processing apparatus of the serving cell by using the transmitter.

With reference to the seventh aspect, in a first possible implementation manner, the processor is specifically configured to acquire air interface data of the user equipment according to the data scheduling information of the coordinated cell, and receive, by using the receiver and on a channel indicated by the air interface data of the user equipment, the first data sent by the user equipment.

With reference to the seventh aspect or the first possible implementation manner, in a second possible implementation manner,
the processor is specifically configured to perform, according to the data scheduling information of the coordinated cell, time-frequency domain transformation or multiple-input multiple-output MIMO balancing or inverse discrete Fourier transform IDFT or quadrature amplitude modulation QAM demodulation on the first data; and
send, to the baseband processing apparatus of the serving cell by using the transmitter, first data obtained after the baseband processing apparatus of the coordinated cell performs the time-frequency domain transformation or the multiple-input multiple-output MIMO balancing or the inverse discrete Fourier transform IDFT or the quadrature amplitude modulation QAM demodulation.

According to an eighth aspect, a central scheduling apparatus is provided, where the apparatus includes: at least one processor, a memory, a transmitter, and a data bus, where the data bus is configured to implement a connection and communication between the processor, the memory, and the transmitter, and the memory is configured to store program code and data that are executed by the processor;
the processor is configured to generate data scheduling information for receiving data of a user equipment, where the data scheduling information includes: data scheduling information of a serving cell and data scheduling information of at least one coordinated cell;
the processor is configured to send, by using the transmitter, the data scheduling information of the serving cell to a baseband processing apparatus of the serving cell, so that the baseband processing apparatus of the serving cell receives, according to the data scheduling information of the serving cell, second data sent by the user equipment; and
the processor is configured to separately send, by using the transmitter, the data scheduling information of the at least one coordinated cell to a baseband processing apparatus of the corresponding coordinated cell, so that the baseband processing apparatus of the coordinated cell receives, according to the data scheduling information of the corresponding coordinated cell, first data sent by the user equipment.

According to a ninth aspect, a baseband processing apparatus is provided, where the apparatus is applied to a serving cell and includes: at least one processor, a memory, a receiver, and a data bus, where the data bus is configured to implement a connection and communication between the processor, the memory, and the receiver, and the memory is configured to store program code and data that are executed by the processor;
the processor is configured to receive, by using the receiver, data scheduling information of the serving cell that is sent by a central scheduling apparatus;
the processor is configured to acquire, by using the receiver and according to the data scheduling information of the serving cell, second data sent by a user equipment;
the processor is configured to receive, by using the receiver, first data sent by a baseband processing apparatus of the coordinated cell; and
the processor is further configured to perform coordinated multipoint CoMP combination of the first data and the second data.

With reference to the ninth aspect, in a first possible implementation manner,
the processor is specifically configured to acquire air interface data of the user equipment according to the data scheduling information of the serving cell; and
the processor is further configured to receive, by using the receiver and on a channel indicated by the air interface data of the user equipment, the second data sent by the user equipment.

With reference to the ninth aspect or the first possible implementation manner, in a second possible implementation manner, the processor is further configured to perform, according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

With reference to the ninth aspect or the first possible implementation manner, in a third possible implementation manner,
the first data is first data obtained after the baseband processing apparatus of the coordinated cell performs time-frequency domain transformation or multiple-input multiple-output MIMO balancing or IDFT or QAM demodulation.

According to a tenth aspect, a base station is provided, where the base station includes: a central scheduling apparatus, a baseband processing apparatus of a serving cell, and a baseband processing apparatus of at least one coordinated cell, where the central scheduling apparatus is the foregoing central scheduling apparatus, the baseband processing apparatus of the serving cell is the foregoing baseband processing apparatus of the serving cell, and the baseband processing apparatus of the coordinated cell is the foregoing baseband processing apparatus of the coordinated cell.

According to an eleventh aspect, a system is provided, where the system includes at least one base station, and the base station is the foregoing base station.

With reference to the eleventh aspect, in a first possible implementation manner,
when the communications system includes at least two base stations that communicate with each other, a central scheduling apparatus of each of the base stations is further configured to share data scheduling information for receiving data of a user equipment with a central scheduling apparatus of another base station, to facilitate data transmission between a baseband processing apparatus of a serving cell and a baseband processing apparatus of a coordinated cell that belong to different base stations.

According to the data scheduling method, the apparatus, the base station, and the system that are provided by the embodiments of the present invention, coordinated multipoint data scheduling information is sent to a baseband processing apparatus in each cell by using a base station or a central scheduling apparatus between base stations; and a baseband processing apparatus of a coordinated cell sends, to a baseband processing apparatus of a serving cell, coordinated multipoint data that needs to be provided for a user, so that a granularity of data transmission is of a cell level instead of a user level, which can reduce times of transmitting scheduling information between the serving cell and the coordinated cell and reduce waste of resources for data transmission.

### BRIEF DESCRIPTION OF DRAWINGS

To describe the technical solutions in the embodiments of the present invention or in the prior art more clearly, the following briefly introduces the accompanying drawings required for describing the embodiments or the prior art.
FIG. 1 is a schematic structural diagram of a system according to an embodiment of the present invention;
FIG. 2 is a schematic structural diagram of a system according to another embodiment of the present invention;
FIG. 3 is a schematic structural diagram of a base station according to an embodiment of the present invention;
FIG. 3a is a schematic diagram of a communications relationship between base stations according to the system shown in FIG. 2 of the present invention;
FIG. 4 is a schematic structural diagram of a central scheduling apparatus according to an embodiment of the present invention;
FIG. 5 is a schematic structural diagram of a baseband processing apparatus according to an embodiment of the present invention;
FIG. 6 is a schematic structural diagram of another baseband processing apparatus according to an embodiment of the present invention;
FIG. 7 is a schematic structural diagram of a central scheduling apparatus according to another embodiment of the present invention;
FIG. 8 is a schematic structural diagram of a baseband processing apparatus according to another embodiment of the present invention;
FIG. 9 is a schematic structural diagram of another baseband processing apparatus according to another embodiment of the present invention;
FIG. 10 is a schematic flowchart of a data scheduling method according to an embodiment of the present invention;
FIG. 11 is a schematic flowchart of another data scheduling method according to an embodiment of the present invention; and
FIG. 12 is a schematic flowchart of still another data scheduling method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

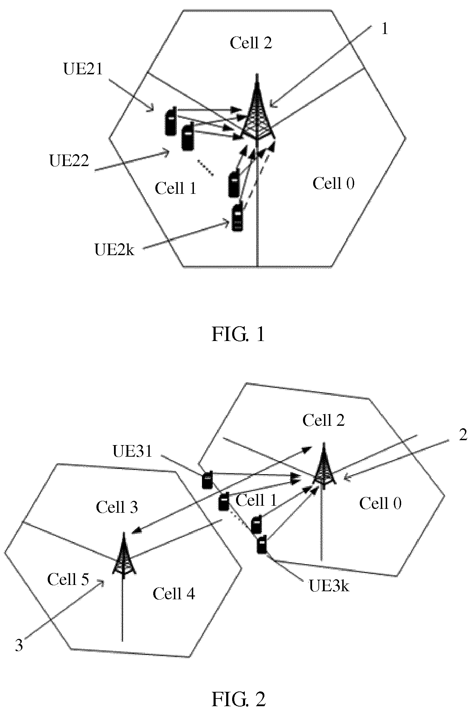

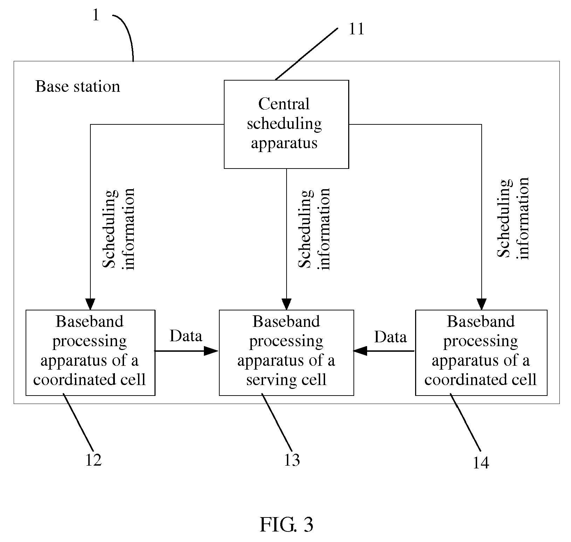

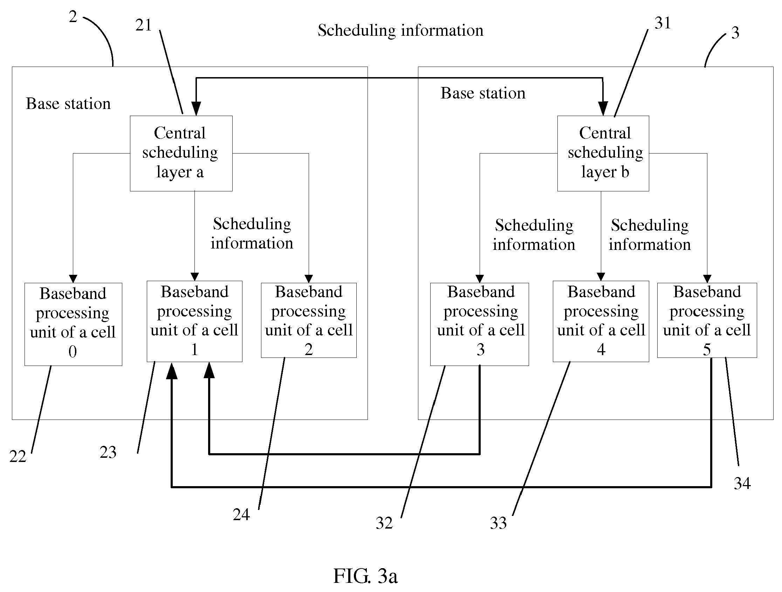

Embodiments of the present invention apply to an LTE system to implement cell coordinated multipoint transmission of data of a user equipment. Specifically, an embodiment of the present invention provides a system. Referring to FIG. 1, the system includes at least one base station 1, where the base station 1 and a user equipment UE21 (user equipments UE21-2k are all user equipments served by the base station 1) that requires CoMP jointly constitute the system. Referring to FIG. 3, the base station 1 provided by this embodiment of the present invention applies to the system provided in the foregoing FIG. 1, which specifically includes: a central scheduling apparatus 11, a baseband processing apparatus 13 of a serving cell, and a baseband processing apparatus 12 of at least one coordinated cell. (In FIG. 3, 14 is also a baseband processing apparatus of a coordinated cell. A function of 14 is completely the same as that of the baseband processing apparatus 12 of the coordinated cell, and either of 14 and the baseband processing apparatus 12 of the coordinated cell is used as an example herein for description. In the following embodiments, the baseband processing apparatus 12 of the coordinated cell and the user equipment UE21 are used as an example for description.)

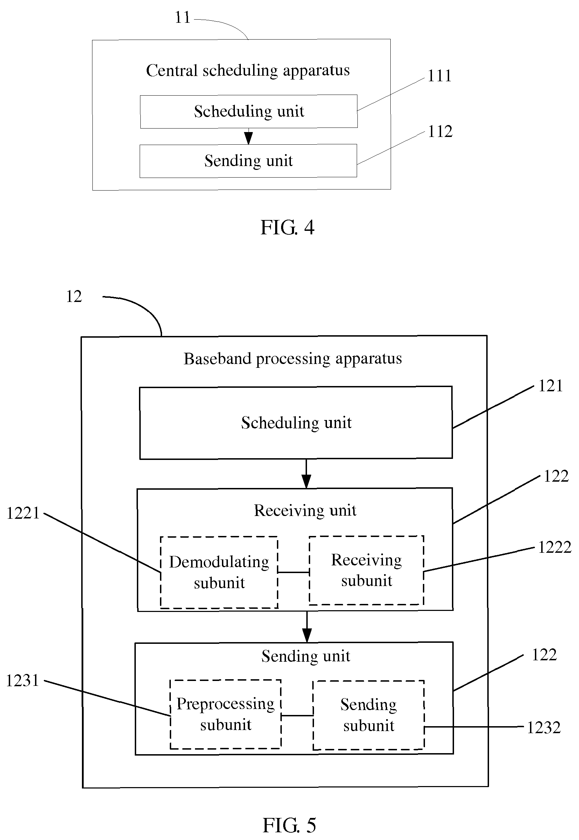

Referring to FIG. 4, the central scheduling apparatus 11 includes: a scheduling unit 111 and a sending unit 112;
the scheduling unit 111 is configured to generate data scheduling information for receiving data of a user equipment UE21 and send the data scheduling information to the sending unit 112, where the data scheduling information includes: data scheduling information of a serving cell and data scheduling information of at least one coordinated cell;
the sending unit 112 is configured to receive the data scheduling information sent by the scheduling unit 111 and send the data scheduling information of the serving cell to a baseband processing apparatus of the serving cell, so that the baseband processing apparatus of the serving cell receives, according to the data scheduling information of the serving cell, second data sent by the user equipment UE21; and
the sending unit 112 is further configured to send the data scheduling information of the at least one coordinated cell to a baseband processing apparatus of the corresponding coordinated cell, so that the baseband processing apparatus of the coordinated cell receives, according to the data scheduling information of the corresponding coordinated cell, first data sent by the user equipment UE21.

Referring to FIG. 5, the baseband processing apparatus 12 is provided, where the apparatus 12 is applied to a coordinated cell and includes a scheduling unit 121, a receiving unit 122, and a sending unit 123;
the scheduling unit 121 is configured to receive data scheduling information of the coordinated cell that is sent by a central scheduling apparatus, and send the data scheduling information of the coordinated cell to the receiving unit 122;
the receiving unit 122 is configured to receive the data scheduling information of the coordinated cell that is sent by the scheduling unit 121, acquire, according to the data scheduling information of the coordinated cell, first data sent by a user equipment, and send the first data to the sending unit 123; and
the sending unit 123 is configured to receive the first data sent by the receiving unit 122 and send the first data to a baseband processing apparatus of a serving cell.

Further, referring to FIG. 5, the receiving unit 122 includes a demodulating subunit 1221 and a receiving subunit 1222, where:
the demodulating subunit 1221 is configured to acquire air interface data of the user equipment according to the data scheduling information of the coordinated cell, and send the air interface data of the user equipment to the receiving subunit 1222; and
the receiving subunit 1222 is configured to receive the air interface data of the user equipment that is sent by the demodulating subunit 1221, and receive, on a channel indicated by the air interface data of the user equipment, the first data sent by the user equipment.

Further, referring to FIG. 5, the sending unit 123 includes a preprocessing subunit 1234 and a sending subunit 1232;
the preprocessing subunit 1231 is configured to acquire the data scheduling information of the coordinated cell that is sent by the scheduling unit 121 and the first data sent by the receiving unit 122, and perform, according to the data scheduling information of the coordinated cell, time-frequency domain transformation or multiple-input multiple-output (Multi-input Multi-output, MIMO) balancing or inverse discrete Fourier transform (Inverse Discrete Fourier Transform, IDFT) or quadrature amplitude modulation (Quadrature Amplitude Modulation QAM) demodulation on the first data; and
the sending subunit 1232 is configured to send, to the baseband processing apparatus of the serving cell, first data obtained after the preprocessing subunit performs the time-frequency domain transformation or the multiple-input multiple-output MIMO balancing or the inverse discrete Fourier transform IDFT or the quadrature amplitude modulation QAM demodulation.

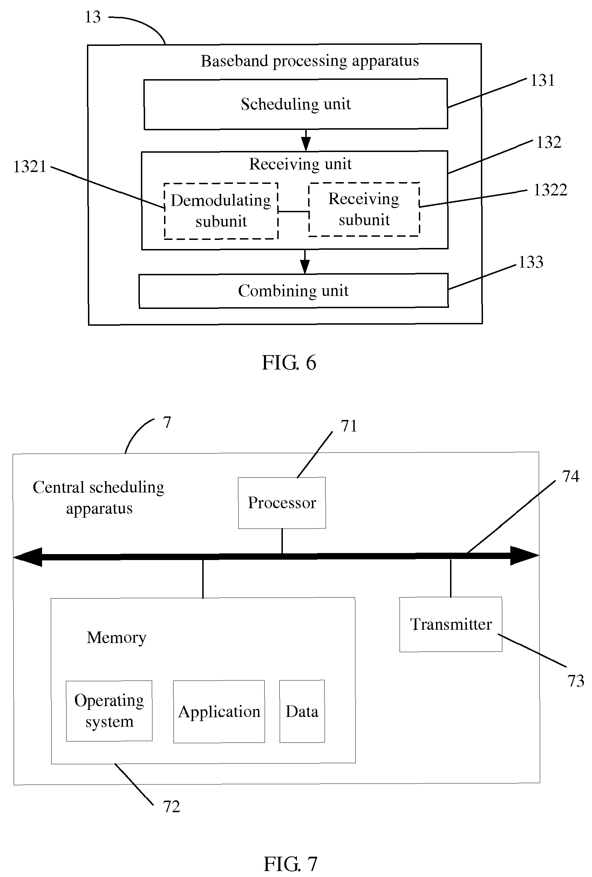

In addition, the baseband processing apparatus 13 of the serving cell is provided. Referring to FIG. 6, the baseband processing apparatus 13 of the serving cell includes: a scheduling unit 131, a receiving unit 132, and a combining unit 133;
the scheduling unit 131 is configured to receive data scheduling information of the serving cell that is sent by a central scheduling apparatus, and send the data scheduling information of the serving cell to the receiving unit 132;
the receiving unit 132 is configured to receive the data scheduling information of the serving cell that is sent by the scheduling unit 131, acquire, according to the data scheduling information of the serving cell, second data sent by a user equipment, and send the second data to the combining unit 133; and
the receiving unit 132 is further configured to receive first data sent by a baseband processing apparatus of a coordinated cell, and send the first data to the combining unit 133; and
the combination unit 133 is configured to receive the first data and the second data that are sent by the receiving unit 132, and perform coordinated multipoint CoMP combination of the first data and the second data.

Further, referring to FIG. 6, the receiving unit 132 includes a demodulating subunit 1321 and a receiving subunit 1322, where:
the demodulating subunit 1321 is configured to acquire air interface data of the user equipment according to the data scheduling information of the serving cell, and send the air interface data of the user equipment to the receiving subunit 1322; and
the receiving subunit 1322 is configured to receive the air interface data of the user equipment that is sent by the demodulating subunit 1322, and receive, on a channel indicated by the air interface data, the second data sent by the user equipment.

Optionally, the combining unit 133 is specifically configured to acquire the data scheduling information of the serving cell, receive the first data and the second data that are sent by the receiving unit 132, and perform, according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

Optionally, the first data is first data obtained after the baseband processing apparatus of the coordinated cell performs the time-frequency domain transformation or the multiple-input multiple-output MIMO balancing or the IDFT or the QAM demodulation.

According to the data scheduling system, the base station, and the apparatus that are provided by this embodiment of the present invention, coordinated multipoint data scheduling information is sent to a baseband processing apparatus in each cell by using a base station or a central scheduling apparatus between base stations; and a baseband processing apparatus of a coordinated cell sends, to a baseband processing apparatus of a serving cell, coordinated multipoint data that needs to be provided for a user, so that a granularity of data transmission is of a cell level instead of a user level, which can reduce times of transmitting scheduling information between the serving cell and the coordinated cell, reduce waste of resources for data transmission and complexity of data transmission, and improve system reliability.

Specifically, referring to FIG. 1 and FIG. 3, the system shown in FIG. 1 includes the base station 1, and the user equipments are UE(21-2K). Three cells, that is, a cell 0, a cell 1 and a cell 2, belong to the base station 1, where the cell 1 is a serving cell of the user equipment UE21, the cell 0 and the cell 2 are coordinated cells of the user equipment UE21, and the cell 0, the cell 1 and the cell 2 provide a service for the user equipment UE21 together as a coordinated cluster of the user equipment UE21. A specific coordinated multipoint CoMP process is as follows:
The central scheduling apparatus 11 determines a user equipment that serves as CoMP coordinated multipoint. That the user equipment UE21 needs to serve as coordinated multipoint is used an example herein for description. The central scheduling apparatus 11 generates data scheduling information for receiving data of the user equipment UE21, where the data scheduling information includes data scheduling information of the serving cell (the cell 1) and data scheduling information of the coordinated cells (the cell 0 and the cell 2 shown in FIG. 1, where functions of the cell 0 and those of the cell 2 are exactly the same, and the cell 0 is used as an example herein for description). The central scheduling apparatus 11 sends the data scheduling information of the serving cell (the cell 1) to the baseband processing apparatus 13 of the serving cell. The central scheduling apparatus 11 sends the data scheduling information of the coordinated cell (the cell 0) to the baseband processing apparatus 12 of the coordinated cell.

The baseband processing apparatus 12 of the cell 0 receives data scheduling information of the cell 0 that is sent by the central scheduling apparatus 11, and acquires air interface data of the user equipment UE21 according to the data scheduling information of the cell 0. The baseband processing apparatus 12 of the cell 0 receives, on a channel indicated by the air interface data of the user equipment UE21, first data sent by the user equipment UE21, and performs, according to an indication in the data scheduling information of the cell 0, processing of time-frequency domain transformation or multiple-input multiple-output MIMO balancing or inverse discrete Fourier transform IDFT or quadrature amplitude modulation QAM demodulation on the received first data, or may not perform further processing on the first data.

The baseband processing apparatus 12 of the cell 0 sends the first data to the baseband processing apparatus 13 of the cell 1.

The baseband processing apparatus 13 of the cell 1 receives data scheduling information of the cell 1 that is sent by the central scheduling apparatus 11, and acquires the air interface data of the user equipment UE21 from the data scheduling information of the cell 1.

The baseband processing apparatus 13 of the cell 1 receives, on the channel indicated by the air interface data of the user equipment UE21, the second data sent by the user equipment UE21.

The baseband processing apparatus 13 of the cell 1 receives the first data sent by the baseband processing apparatus 12 of the cell 0.

The baseband processing apparatus 13 of the serving cell performs coordinated multipoint CoMP combination of the first data and the second data.

If processing of time-frequency domain transformation or multiple-input multiple-output MIMO balancing or inverse discrete Fourier transform IDFT or quadrature amplitude modulation QAM demodulation of the cell 0 is performed on the first data, the baseband processing apparatus 14 of the cell 2 directly performs coordinated multipoint CoMP combination of the first data and the second data. If processing of time-frequency domain transformation or multiple-input multiple-output MIMO balancing or inverse discrete Fourier transform IDFT or quadrature amplitude modulation QAM demodulation of the cell 0 is not performed on the first data, the baseband processing apparatus 14 of the cell 2 first performs processing of time-frequency domain transformation or multiple-input multiple-output MIMO balancing or inverse discrete Fourier transform IDFT or quadrature amplitude modulation QAM demodulation on the received first data, and then performs coordinated multipoint CoMP combination of the first data and the second data.

Similarly, if the central scheduling apparatus needs to perform CoMP for the three cells, the central scheduling apparatus needs to instruct a baseband processing apparatus of each coordinated cell to send data indicated by the data scheduling information to the serving cell. Certainly, such a case has been disclosed in the claims, and details are not described again.

Optionally, referring to FIG. 2, an embodiment of the present invention provides a communications system, where the system includes at least two base stations that communicate with each other, where a central scheduling apparatus of each of the base stations is further configured to share, with a central scheduling apparatus of another base station, data scheduling information for receiving data of a user equipment, to facilitate data transmission between a baseband processing apparatus of a serving cell and a baseband processing apparatus of a coordinated cell that belong to different base stations. Referring to FIG. 3a, that data scheduling is performed for a user equipment UE31 served by a base station 2 is used as an example. The user equipment UE31 is located in a cell 1 of the base station 2, that is, the cell 1 is a serving cell of the user equipment UE31. A central scheduling apparatus 21 is located in the base station 2 and a central scheduling apparatus 31 is located in a base station 3, where central scheduling apparatuses 2 and 3 of the base station may share data scheduling information in view of receiving data of the user equipment UE31. In this case, inside each base station, a baseband processing apparatus in each cell can implement, in a data scheduling manner of the system shown in the foregoing FIG. 1, data transmission between baseband processing apparatuses in cells of different base stations.

Specifically, referring to FIG. 2 and FIG. 3a, the communications system includes at least two base stations, that is, the base stations 2 and 3, where the base stations 2 and 3 and the user equipment UE31 served by the base station 2 (31-3k are all user equipments served by the base station 2) jointly constitute the communications system. Functions of the base stations 2 and 3 are still the same as those of the base station provided by the embodiment shown in FIG. 3 of the present invention. Three cells, that is, a cell 0, the cell 1, and the cell 2, belong to the base station 1, where the cell 1 is the serving cell of the user equipment UE31. Three cells, that is, a cell 3, a cell 4, and a cell 5, belong to the base station 3, where the cell 3 and the cell 5 are coordinated cells of the user equipment UE31, and the cell 1, the cell 3, and the cell 5 provide a service for the user equipment UE31 together as a coordinated cluster of the user equipment UE31. A specific CoMP process is as follows:
The central scheduling apparatus 21 determines a user equipment that needs to serve as CoMP coordinated multipoint. That the user equipment UE31 needs to serve as coordinated multipoint is used an example herein for description.

The central scheduling apparatus 21 generates data scheduling information for receiving data of the user equipment UE31, where the data scheduling information includes data scheduling information of the serving cell (the cell 1) and data scheduling information of the coordinated cells (the cell 3, the cell 4, and the cell 5 shown in FIG. 2, where functions of the cell 3, the cell 4, and the cell 5 are exactly the same, and the cell 3 is used as an example herein for description). The central scheduling apparatus 21 sends the data scheduling information of the cell 1 to a baseband processing apparatus 12 of the cell 1. The central scheduling apparatus 21 sends data scheduling information of the cell 3 to the central scheduling apparatus 31 of the base station 3 in which a baseband processing apparatus 32 of the cell 3 is located.

The central scheduling apparatus 31 of the base station 3 shares the data scheduling information of the cell 3 with the central scheduling apparatus 21 of the base station 2, and sends the data scheduling information to the baseband processing apparatus 32 of the cell 3.

The baseband processing apparatus 32 of the cell 3 receives the data scheduling information of the cell 3 that is sent by the central scheduling apparatus 31, and acquires air interface data of the user equipment UE31 from the data scheduling information of the cell 3.

The baseband processing apparatus 32 of the cell 3 receives, on a channel indicated by the air interface data of the user equipment UE31, first data sent by the user equipment UE31, and performs, according to an indication in the data scheduling information of the cell 3, processing of time-frequency domain transformation or multiple-input multiple-output MIMO balancing or inverse discrete Fourier transform IDFT or quadrature amplitude modulation QAM demodulation on the received first data, or may not perform further processing on the first data.

The baseband processing apparatus 32 of the cell 3 sends the first data to a baseband processing apparatus 23 of the cell 1.

The baseband processing apparatus 23 of the cell 1 receives the data scheduling information of the cell 1 that is sent by the central scheduling apparatus 21, and acquires the air interface data of the user equipment UE31 from the data scheduling information of the cell 1.

The baseband processing apparatus 23 of the cell 1 receives, on a channel indicated by the air interface data of the user equipment UE31, second data sent by the user equipment UE31.

The baseband processing apparatus 23 of the cell 1 receives the first data sent by the baseband processing apparatus 32 of the cell 3.

The baseband processing apparatus 23 of the serving cell performs coordinated multipoint CoMP combination of the first data and the second data.

Similarly, if processing of time-frequency domain transformation or multiple-input multiple-output MIMO balancing or the inverse discrete Fourier transform IDFT or quadrature amplitude modulation QAM demodulation of the cell 3 is performed on the first data, a baseband processing apparatus 34 of the cell 5 directly performs coordinated multipoint CoMP combination of the first data and the second data. If processing of time-frequency domain transformation or multiple-input multiple-output MIMO balancing or inverse discrete Fourier transform IDFT or quadrature amplitude modulation QAM demodulation of the cell 3 is not performed on the first data, the baseband processing apparatus 34 of the cell 5 first performs processing of time-frequency domain transformation or multiple-input multiple-output MIMO balancing or inverse discrete Fourier transform IDFT or quadrature amplitude modulation QAM demodulation on the received first data, and then performs coordinated multipoint CoMP combination of the first data and the second data.

The foregoing procedure may be applied to a scenario in which intra-site CoMP and inter-site CoMP for different users coexist in a cell, and may also be used for CoMP among three or more cells.

According to the data scheduling apparatus, the base station, and the system that are provided by this embodiment of the present invention, coordinated multipoint data scheduling information is sent to a baseband processing apparatus in each cell by using a base station or a central scheduling apparatus between base stations; and a baseband processing apparatus of a coordinated cell sends, to a baseband processing apparatus of a serving cell, coordinated multipoint data that needs to be provided for a user, so that a granularity of data transmission is of a cell level instead of a user level, which can reduce times of transmitting scheduling information between the serving cell and the coordinated cell, reduce waste of resources for data transmission and complexity of data transmission, and improve system reliability.

An embodiment of the present invention further provides a central scheduling apparatus 7, which is applied to the base station provided by each of the foregoing embodiments and is configured to implement a data scheduling method provided by an embodiment of the present invention. Referring to FIG. 7, the central scheduling apparatus 7 specifically includes: at least one processor 71, a memory 72, a transmitter 73, and a data bus 74, where the data bus 74 is configured to implement a connection and communication between the processor 71, the memory 72, and the transmitter 73, and the memory 72 is configured to store program code and data that are executed by the processor 71.

The data bus 74 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The data bus 74 may be classified into an address bus, a data bus, a control bus, or the like. For ease of denotation, the bus is indicated by using only one thick line in FIG. 7; however, it does not indicate that there is only one bus or only one type of bus.

The memory 72 is configured to store data or executable program code, where the program code includes a computer operation instruction, which may specifically be an operating system, an application program, or the like. The memory 72 may include a high-speed RAM memory, and may further include a non-volatile memory (non-volatile memory), for example, at least one magnetic disk memory.

The processor 71 may be a central processing unit (Central Processing Unit, CPU), or an application-specific integrated circuit (Application Specific Integrated Circuit, ASIC), or be configured as one or more integrated circuits that implement the embodiments of the present invention.

The processor 71 is configured to generate data scheduling information for receiving data of a user equipment, where the data scheduling information includes: data scheduling information of a serving cell and data scheduling information of at least one coordinated cell.

The processor 71 is configured to send the data scheduling information of the serving cell to a baseband processing apparatus of the serving cell by using the transmitter 73, so that the baseband processing apparatus of the serving cell receives, according to the data scheduling information of the serving cell, second data sent by the user equipment.

The processor 71 is configured to separately send the data scheduling information of the at least one coordinated cell to a baseband processing apparatus of the corresponding coordinated cell by using the transmitter 73, so that the baseband processing apparatus of the coordinated cell receives, according to the data scheduling information of the corresponding coordinated cell, first data sent by the user equipment.

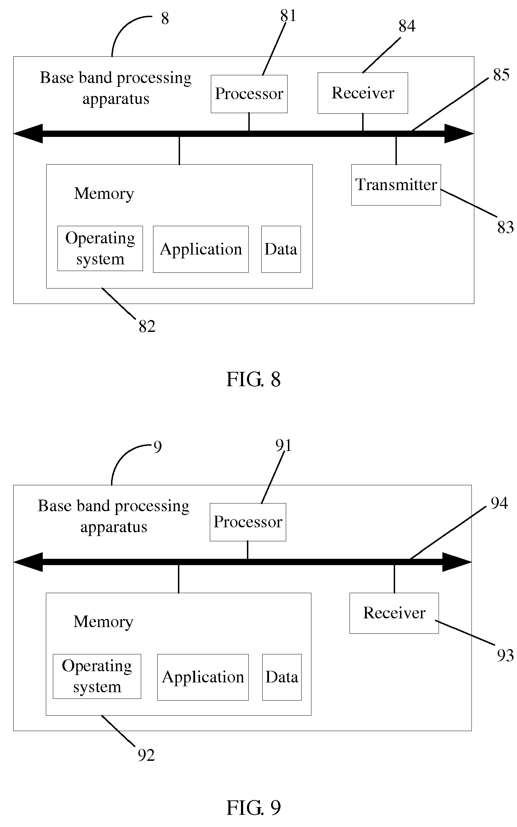

Referring to FIG. 8, an embodiment of the present invention further provides a baseband processing apparatus 8, which is applied to a coordinated cell of the base station provided by each of the foregoing embodiments and is configured to implement a data scheduling method provided by an embodiment of the present invention. Specifically, referring to FIG. 8, the baseband processing apparatus 8 includes: at least one processor 81, a memory 82, a receiver 83, a transmitter 84, and a data bus 85, where the data bus 85 is configured to implement a connection and communication between the processor 81, the memory 82, the receiver 83, and the transmitter 84, and the memory 82 is configured to store program code and data that are executed by the processor 81.

The data bus 85 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The data bus 85 may be classified into an address bus, a data bus, a control bus, or the like. For ease of denotation, the bus is indicated by using only one thick line in FIG. 8; however, it does not indicate that there is only one bus or only one type of bus.

The memory 82 is configured to store data or executable program code, where the program code includes a computer operation instruction, which may specifically be an operating system, an application program, or the like. The memory 82 may include a high-speed RAM memory, and may further include a non-volatile memory (non-volatile memory), for example, at least one magnetic disk memory.

The processor 81 may be a central processing unit (Central Processing Unit, CPU), or an application-specific integrated circuit (Application Specific Integrated Circuit, ASIC), or be configured as one or more integrated circuits that implement the embodiments of the present invention.

The processor 81 is configured to receive, by using the receiver 83, data scheduling information of the coordinated cell that is sent by a central scheduling apparatus.

The processor 81 is configured to acquire, by using the receiver 83 according to the data scheduling information of the coordinated cell, first data sent by a user equipment.

The processor 81 is configured to send, by using the transmitter 84, the first data to a baseband processing apparatus of a serving cell.

Further, the processor 81 is specifically configured to acquire, according to the data scheduling information of the coordinated cell, air interface data of the user equipment, and receive, by using the receiver 83 and on a channel indicated by the air interface data of the user equipment, the first data sent by the user equipment.

Optionally, the processor 81 is specifically configured to perform, according to the data scheduling information of the coordinated cell, time-frequency domain transformation or multiple-input multiple-output MIMO balancing or inverse discrete Fourier transform IDFT or quadrature amplitude modulation QAM demodulation on the first data; and
send, to the baseband processing apparatus of the serving cell by using the transmitter 81, first data obtained after the baseband processing apparatus of the coordinated cell performs the time-frequency domain transformation or the multiple-input multiple-output MIMO balancing or the inverse discrete Fourier transform IDFT or the quadrature amplitude modulation QAM demodulation.

An embodiment of the present invention further provides a baseband processing apparatus 9, which is applied to a serving cell of the base station provided by each of the foregoing embodiments and is configured to implement a data scheduling method provided by an embodiment of the present invention. Specifically, referring to FIG. 9, the baseband processing apparatus 9 includes: at least one processor 91, a memory 92, a receiver 93, and a data bus 94, where the data bus 94 is configured to implement a connection and communication between the processor 91, the memory 92, and the receiver 93, and the memory 92 is configured to store program code and data that are executed by the processor 91.

The data bus 94 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The data bus 94 may be classified into an address bus, a data bus, a control bus, or the like. For ease of denotation, the bus is indicated by using only one thick line in FIG. 9; however, it does not indicate that there is only one bus or only one type of bus.

The memory 92 is configured to store data or executable program code, where the program code includes a computer operation instruction, which may specifically be an operating system, an application program, or the like. The memory 92 may include a high-speed RAM memory, and may further include a non-volatile memory (non-volatile memory), for example, at least one magnetic disk memory.

The processor 91 may be a central processing unit (Central Processing Unit, CPU), or an application-specific integrated circuit (Application Specific Integrated Circuit, ASIC), or be configured as one or more integrated circuits that implement the embodiments of the present invention.

The processor 91 is configured to receive, by using the receiver 93, data scheduling information of the serving cell that is sent by a central scheduling apparatus.

The processor 91 is configured to acquire, by using the receiver 93 according to the data scheduling information of the serving cell, second data sent by a user equipment.

The processor 91 is configured to receive, by using the receiver 93, first data sent by a baseband processing apparatus of a coordinated cell.

The processor 91 is further configured to perform coordinated multipoint CoMP combination of the first data and the second data.

Further, the processor 91 is specifically configured to acquire, according to the data scheduling information of the serving cell, air interface data of the user equipment.

The processor 91 is further configured to receive, by using the receiver 91 and on a channel indicated by the air interface data of the user equipment, the second data sent by the user equipment.

Optionally, the processor 91 is further configured to perform, according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

Optionally, the first data is first data obtained after the baseband processing apparatus of the coordinated cell performs time-frequency domain transformation or multiple-input multiple-output MIMO balancing or IDFT or QAM demodulation.

According to the data scheduling apparatus, the base station, and the system that are provided by this embodiment of the present invention, coordinated multipoint data scheduling information is sent to a baseband processing apparatus in each cell by using a base station or a central scheduling apparatus between base stations; and a baseband processing apparatus of a coordinated cell sends, to a serving cell, coordinated multipoint data that needs to be provided for a user, so that a granularity of data transmission is of a cell level instead of a user level, which can reduce times of transmitting scheduling information between the serving cell and the coordinated cell, reduce waste of resources for data transmission and complexity of data transmission, and improve system reliability.

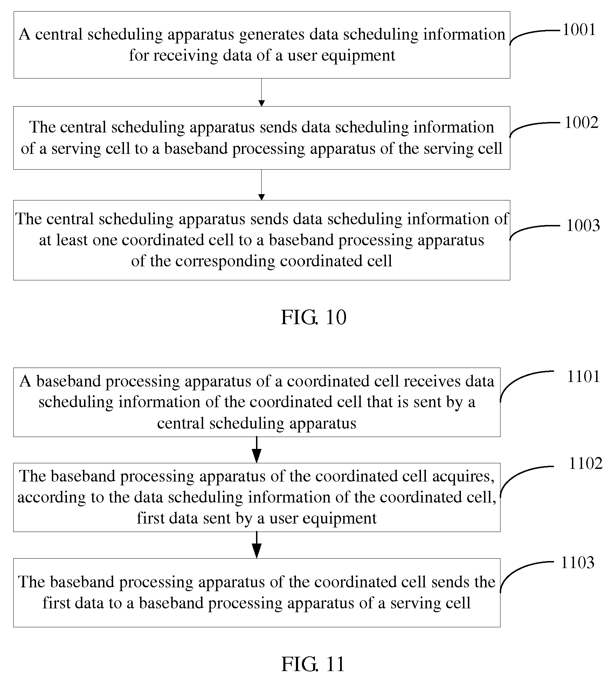

An embodiment of the present invention provides a data scheduling method, which may be specifically applied to an LTE system to implement cell coordinated multipoint transmission of data of a user equipment. Referring to FIG. 10, on a central scheduling apparatus side, the method includes the following steps:
1001. A central scheduling apparatus generates data scheduling information for receiving data of a user equipment, where the data scheduling information includes: data scheduling information of a serving cell and data scheduling information of a coordinated cell.
1002. The central scheduling apparatus sends the data scheduling information of the serving cell to a baseband processing apparatus of the serving cell, so that the baseband processing apparatus of the serving cell receives, according to the data scheduling information of the serving cell, second data sent by the user equipment.
1003. The central scheduling apparatus sends data scheduling information of at least one coordinated cell to a baseband processing apparatus of the corresponding coordinated cell, so that the baseband processing apparatus of the coordinated cell receives, according to the data scheduling information of the coordinated cell, first data sent by the user equipment.

Referring to FIG. 11, an embodiment of the present invention provides another data scheduling method, which is applied to a coordinated cell and includes the following steps:
1101. A baseband processing apparatus of the coordinated cell receives data scheduling information of the coordinated cell that is sent by a central scheduling apparatus.
1102. The baseband processing apparatus of the coordinated cell acquires, according to the data scheduling information of the coordinated cell, first data sent by a user equipment.

Further, step 1102 includes that the baseband processing apparatus of the coordinated cell acquires, according to the data scheduling information of the coordinated cell, air interface data of the user equipment, and receives, on a channel indicated by the air interface data, the first data sent by the user equipment.

1103. The baseband processing apparatus of the coordinated cell sends the first data to a baseband processing apparatus of a serving cell.

Optionally, step 1103 includes that the baseband processing apparatus of the coordinated cell performs, according to the data scheduling information of the coordinated cell, time-frequency domain transformation or multiple-input multiple-output MIMO balancing or inverse discrete Fourier transform IDFT or quadrature amplitude modulation QAM demodulation on the first data.

The baseband processing apparatus of the coordinated cell sends, to the baseband processing apparatus of the serving cell, first data obtained after the time-frequency domain transformation or the multiple-input multiple-output MIMO balancing or the inverse discrete Fourier transform IDFT or the quadrature amplitude modulation QAM demodulation. Certainly, the foregoing operation of the time-frequency domain transformation or the multiple-input multiple-output MIMO balancing or the inverse discrete Fourier transform IDFT or the quadrature amplitude modulation QAM demodulation on the first data may not be performed on a coordinated cell side, and may be performed by the baseband processing apparatus of the serving cell after the first data is received in the serving cell.

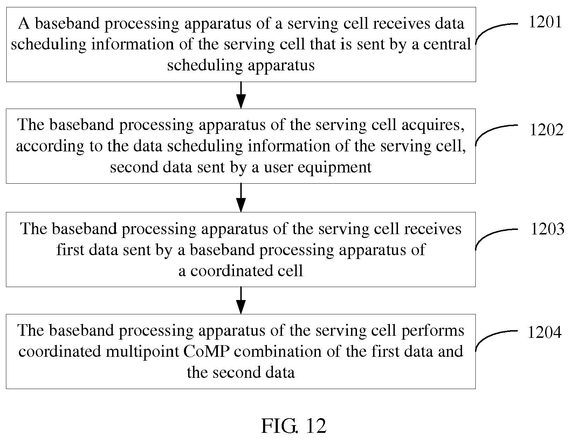

Referring to FIG. 12, an embodiment of the present invention provides another data scheduling method, which is applied to a serving cell, and includes the following steps:
1201. A baseband processing apparatus of the serving cell receives data scheduling information of the serving cell that is sent by a central scheduling apparatus.
1202. The baseband processing apparatus of the serving cell acquires, according to the data scheduling information of the serving cell, second data sent by a user equipment.

Further, step 1202 includes that the baseband processing apparatus of the serving cell acquires, according to the data scheduling information of the serving cell, air interface data of the user equipment, and receives, on a channel indicated by the air interface data, the second data sent by the user equipment.

1203. The baseband processing apparatus of the serving cell receives first data sent by a baseband processing apparatus of a coordinated cell.

1204. The baseband processing apparatus of the serving cell performs coordinated multipoint CoMP combination of the first data and the second data.

Optionally, step 1204 specifically includes that the baseband processing apparatus of the serving cell performs, according to the data scheduling information of the serving cell, the coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data. Certainly, herein it refers to that an operation of the time-frequency domain transformation or the multiple-input multiple-output MIMO balancing or the inverse discrete Fourier transform IDFT or the quadrature amplitude modulation QAM demodulation on the first data is not performed on a coordinated cell side.

If the time-frequency domain transformation or the multiple-input multiple-output MIMO balancing or the inverse discrete Fourier transform IDFT or the quadrature amplitude modulation QAM demodulation has been performed on the first data on the coordinated cell side, the first data is first data obtained after the baseband processing apparatus of the coordinated cell performs the time frequency domain transformation or the multiple-input multiple-output MIMO balancing or the IDFT or the QAM demodulation.

According to the data scheduling method provided by this embodiment of the present invention, coordinated multipoint data scheduling information is sent to a baseband processing apparatus in each cell by using a base station or a central scheduling apparatus between base stations; and a baseband processing apparatus of a coordinated cell sends, to a baseband processing apparatus of a serving cell, coordinated multipoint data that needs to be provided for a user, so that a granularity of data transmission is of a cell level instead of a user level, which can reduce times of transmitting scheduling information between the serving cell and the coordinated cell, reduce a; waste of resources for data transmission and complexity of data transmission, and improve system reliability.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition. any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk, and a Blue-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A data scheduling method applied to a coordinated cell, wherein the method comprises:
receiving, by a baseband processing apparatus of the coordinated cell, data scheduling information of the coordinated cell that is sent by a central scheduling apparatus;
acquiring, by the baseband processing apparatus of the coordinated cell according to the data scheduling information of the coordinated cell, first data sent by a user equipment; and
sending, by the baseband processing apparatus of the coordinated cell, the first data to a baseband processing apparatus of the serving cell.

2. The method according to claim 1, wherein the acquiring, by the baseband processing apparatus of the coordinated cell according to the data scheduling information of the coordinated cell, first data sent by a user equipment comprises:
acquiring, by the baseband processing apparatus of the coordinated cell, air interface data of the user equipment according to the data scheduling information of the coordinated cell; and
receiving, by the baseband processing apparatus of the coordinated cell, on a channel indicated by the air interface data of the user equipment, the first data sent by the user equipment.

3. The method according to claim 1 or 2, wherein the sending, by the baseband processing apparatus of the coordinated cell, the first data to a baseband processing apparatus of the serving cell comprises:
performing, by the baseband processing apparatus of the coordinated cell according to the data scheduling information of the coordinated cell, time-frequency domain transformation or multiple-input multiple-output MIMO balancing or inverse discrete Fourier transform IDFT or quadrature amplitude modulation QAM demodulation on the first data; and
sending, by the baseband processing apparatus of the coordinated cell to the baseband processing apparatus of the serving cell, first data obtained after the time-frequency domain transformation or the multiple-input multiple-output MIMO balancing or the inverse discrete Fourier transform IDFT or the quadrature amplitude modulation QAM demodulation.

4. A data scheduling method, compusing:
generating, by a central scheduling apparatus, data scheduling information for receiving data of a user equipment, wherein the data scheduling information comprises: data scheduling information of a serving cell and data scheduling information of at least one coordinated cell;
sending, by the central scheduling apparatus, the data scheduling information of the serving cell to a baseband processing apparatus of the serving cell, so that the baseband processing apparatus of the serving cell receives, according to the data scheduling information of the serving cell, second data sent by the user equipment; and
separately sending, by the central scheduling apparatus, the data scheduling information of the at least one coordinated cell to a baseband processing apparatus of the corresponding coordinated cell, so that the baseband processing apparatus of the coordinated cell receives, according to data scheduling information of the corresponding coordinated cell, first data sent by the user equipment.

5. A data scheduling method applied to a serving cell, wherein the method comprises:
receiving, by a baseband processing apparatus of the serving cell, data scheduling information of the serving cell that is sent by a central scheduling apparatus;
acquiring, by the baseband processing apparatus of the serving cell according to the data scheduling information of the serving cell, second data sent by a user equipment;
receiving, by the baseband processing apparatus of the serving cell, first data sent by a baseband processing apparatus of a coordinated cell; and
performing, by the baseband processing apparatus of the serving cell, coordinated multipoint CoMP combination of the first data and the second data.

6. The method according to claim 5, wherein the acquiring, by the baseband processing apparatus of the serving cell according to the data scheduling information of the serving cell, second data sent by a user equipment comprises:
acquiring, by the baseband processing apparatus of the serving cell, air interface data of the user equipment according to the data scheduling information of the serving cell; and
receiving, by the baseband processing apparatus of the serving cell, on a channel indicated by the air interface data of the user equipment, the second data sent by the user equipment.

7. The method according to claim 5 or 6, wherein the performing, by the baseband processing apparatus of the serving cell, coordinated multipoint CoMP combination of the first data and the second data comprises:
performing, by the baseband processing apparatus of the serving cell according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

8. The method according to claim 5 or 6, wherein:
the first data is first data obtained after the baseband processing apparatus of the coordinated cell performs time-frequency domain transformation or multiple-input multiple-output MIMO balancing or IDFT or QAM demodulation.

9. A baseband processing apparatus applied to a coordinated cell, wherein the apparatus comprises: a scheduling unit, a receiving unit, and a sending unit;
the scheduling unit is configured to receive data scheduling information of the coordinated cell that is sent by a central scheduling apparatus, and send the data scheduling information of the coordinated cell to the receiving unit;
the receiving unit is configured to receive the data scheduling information of the coordinated cell that is sent by the scheduling unit, acquire, according to the data scheduling information of the coordinated cell, first data sent by a user equipment, and send the first data to the sending unit; and
the sending unit is configured to receive the first data sent by the receiving unit, and send the first data to a baseband processing apparatus of the serving cell.

10. The apparatus according to claim 9, wherein the receiving unit comprises a demodulating subunit and a receiving subunit; wherein:
the demodulating subunit is configured to acquire air interface data of the user equipment according to the data scheduling information of the coordinated cell, and send the air interface data of the user equipment to the receiving subunit; and
the receiving subunit is configured to receive the air interface data of the user equipment that is sent by the demodulating subunit, and receive, on a channel indicated by the air interface data of the user equipment, the first data sent by the user equipment.

11. The baseband processing apparatus according to claim 9 or 10, wherein the sending unit comprises a preprocessing subunit and a sending subunit;
the preprocessing subunit is configured to acquire the data scheduling information of the coordinated cell that is sent by the scheduling unit and the first data sent by the receiving unit, and perform, according to the data scheduling information of the coordinated cell, time-frequency domain transformation or multiple-input multiple-output MIMO balancing or inverse discrete Fourier transform IDFT or quadrature amplitude modulation QAM demodulation on the first data; and
the sending subunit is configured to send, to the baseband processing apparatus of the serving cell, first data obtained after the preprocessing subunit performs the time-frequency domain transformation or the multiple-input multiple-output MIMO balancing or the inverse discrete Fourier transform IDFT or the quadrature amplitude modulation QAM demodulation.

12. A central scheduling apparatus, comprising: a scheduling unit and a sending unit;
the scheduling unit is configured to generate data scheduling information for receiving data of a user equipment, and send the data scheduling information to the sending unit, wherein the data scheduling information comprises: data scheduling information of a serving cell and data scheduling information of at least one coordinated cell;
the sending unit is configured to receive the data scheduling information sent by the scheduling unit, and send the data scheduling information of the serving cell to a baseband processing apparatus of the serving cell, so that the baseband processing apparatus of the serving cell receives, according to the data scheduling information of the serving cell, second data sent by the user equipment; and
the sending unit is further configured to send the data scheduling information of the at least one coordinated cell to a baseband processing apparatus of the corresponding coordinated cell, so that the baseband processing apparatus of the coordinated cell receives, according to the data scheduling information of the corresponding coordinated cell, first data sent by the user equipment.

13. A baseband processing apparatus applied to a serving cell, wherein the apparatus comprises: a scheduling unit, a receiving unit, and a combining unit;
the scheduling unit is configured to receive data scheduling information of the serving cell that is sent by a central scheduling apparatus, and send the data scheduling information of the serving cell to the receiving unit;
the receiving unit is configured to receive the data scheduling information of the serving cell that is sent by the scheduling unit, acquire, according to the data scheduling information of the serving cell, second data sent by a user equipment, and send the second data to the combining unit;
the receiving unit is further configured to receive first data sent by a baseband processing apparatus of a coordinated cell, and send the first data to the combining unit; and
the combining unit is configured to receive the first data and the second data that are sent by the receiving unit, and perform coordinated multipoint CoMP combination of the first data and the second data.

14. The apparatus according to claim 13, wherein the receiving unit comprises a demodulating subunit and a receiving subunit; wherein:
the demodulating subunit is configured to acquire air interface data of the user equipment according to the data scheduling information of the serving cell, and send the air interface data of the user equipment to the receiving subunit; and
the receiving subunit is configured to receive the air interface data of the user equipment that is sent by the demodulating subunit, and receive, on a channel indicated by the air interface data, the second data sent by the user equipment.

15. The apparatus according to claim 13 or 14, wherein:
the combining unit is specifically configured to acquire the data scheduling information of the serving cell, receive the first data and the second data that are sent by the receiving unit, and perform, according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

16. The apparatus according to claim 13 or 14, wherein:
the first data is first data obtained after the baseband processing apparatus of the coordinated cell performs time-frequency domain transformation or multiple-input multiple-output MIMO balancing or IDFT or QAM demodulation.

17. A baseband processing apparatus applied to a coordinated cell, wherein the apparatus comprises: at least one processor, a memory, a receiver, a transmitter, and a data bus, wherein the data bus is configured to implement a connection and communication between the processor, the memory, the receiver, and the transmitter, and the memory is configured to store program code and data that are executed by the processor;
the processor is configured to receive, by using the receiver, data scheduling information of the coordinated cell that is sent by a central scheduling apparatus;
the processor is configured to acquire, according to the data scheduling information of the coordinated cell and by using the receiver, first data sent by a user equipment; and
the processor is configured to send the first data to a baseband processing apparatus of the serving cell by using the transmitter.

18. The apparatus according to claim 17, wherein the processor is specifically configured to acquire air interface data of the user equipment according to the data scheduling information of the coordinated cell, and receive, by using the receiver and on a channel indicated by the air interface data of the user equipment, the first data sent by the user equipment.

19. The apparatus according to claim 17 or 18, wherein:
the processor is specifically configured to perform, according to the data scheduling information of the coordinated cell, time-frequency domain transformation or multiple-input multiple-output MIMO balancing or inverse discrete Fourier transform IDFT or quadrature amplitude modulation QAM demodulation on the first data; and
send, to the baseband processing apparatus of the serving cell by using the transmitter, first data obtained after the baseband processing apparatus of the coordinated cell performs the time-frequency domain transformation or the multiple-input multiple-output MIMO balancing or the inverse discrete Fourier transform IDFT or the quadrature amplitude modulation QAM demodulation.

20. A central scheduling apparatus, comprising: at least one processor, a memory, a transmitter, and a data bus, wherein the data bus is configured to implement a connection and communication between the processor, the memory, and the transmitter, and the memory is configured to store program code and data that are executed by the processor;
the processor is configured to generate data scheduling information for receiving data of a user equipment, wherein the data scheduling information comprises: data scheduling information of a serving cell and data scheduling information of at least one coordinated cell;
the processor is configured to send, by using the transmitter, the data scheduling information of the serving cell to a baseband processing apparatus of the serving cell, so that the baseband processing apparatus of the serving cell receives, according to the data scheduling information of the serving cell, second data sent by the user equipment; and
the processor is configured to separately send, by using the transmitter, the data scheduling information of the at least one coordinated cell to a baseband processing apparatus of the corresponding coordinated cell, so that the baseband processing apparatus of the coordinated cell receives, according to the data scheduling information of the corresponding coordinated cell, first data sent by the user equipment.

21. A baseband processing apparatus applied to a serving cell, wherein the apparatus comprises: at least one processor, a memory, a receiver, and a data bus, wherein the data bus is configured to implement a connection and communication between the processor, the memory, and the receiver, and the memory is configured to store program code and data that are executed by the processor;
the processor is configured to receive, by using the receiver, data scheduling information of the serving cell that is sent by a central scheduling apparatus;
the processor is configured to acquire, by using the receiver and according to the data scheduling information of the serving cell, second data sent by a user equipment;
the processor is configured to receive, by using the receiver, first data sent by a baseband processing apparatus of the coordinated cell; and
the processor is further configured to perform coordinated multipoint CoMP combination of the first data and the second data.

22. The apparatus according to claim 21, wherein:
the processor is specifically configured to acquire air interface data of the user equipment according to the data scheduling information of the serving cell; and
the processor is further configured to receive, by using the receiver and on a channel indicated by the air interface data of the user equipment, the second data sent by the user equipment.

23. The apparatus according to claim 21 or 22, wherein:
the processor is further configured to perform, according to the data scheduling information of the serving cell, coordinated multipoint CoMP combination of the second data and the first data after time-frequency domain transformation or multiple-input multiple-output MIMO balancing or inverse discrete Fourier transform IDFT or quadrature amplitude modulation QAM demodulation is performed on the first data.

24. The apparatus according to claim 21 or 22, wherein:
the first data is first data obtained after the baseband processing apparatus of the coordinated cell performs time-frequency domain transformation or multiple-input multiple-output MIMO balancing or IDFT or QAM demodulation.

25. A base station, comprising: a central scheduling apparatus, a baseband processing apparatus of a serving cell, and a baseband processing apparatus of at least one coordinated cell, wherein the central scheduling apparatus is the central scheduling apparatus according to claim 12; the baseband processing apparatus of the serving cell is the baseband processing apparatus according to any one of claims 13 to 16; the baseband processing apparatus of the coordinated cell is the baseband processing apparatus according to any one of claims 9 to 11; or
the central scheduling apparatus is the central scheduling apparatus according to claim 20; the baseband processing apparatus of the serving cell is the baseband processing apparatus according to any one of claims 21 to 24; the baseband processing apparatus of the coordinated cell is the baseband processing apparatus according to any one of claims 17 to 19.

26. A communications system, comprising at least one base station, wherein the base station is the base station according to claim 25.

27. The communications system according to claim 26, wherein when the communications system comprises at least two base stations that communicate with each other, a central scheduling apparatus of each of the base stations is further configured to share data scheduling information for receiving data of a user equipment with a central scheduling apparatus of another base station, to facilitate data transmission between a baseband processing apparatus of a serving cell and a baseband processing apparatus of a coordinated cell that belong to different base stations.
